# EUROPEAN PATENT APPLICATION

(11) **EP 1 066 869 A1**
(43) Date of publication of application: **10.01.2001**
(21) Application number: 99906022.1
(22) Date of filing: 25.02.1999
(51) Int. Cl.: B01D 35/00, F01M 1/02

(54) **A SEE-THROUGH FILTER FOR INJECTING OIL INTO AN ENGINE PRIOR TO ITS STARTUP**

(30) Priority: 26.02.1998 CN 98201739
(71) Applicant: Yang, Shiheng, Sanhe City, Hebei Province 065200 (CN)
(72) Inventor: Yang, Shiheng, Sanhe City, Hebei Province 065200 (CN)
(74) Representative: Jorritsma, Ruurd
(86) International application number: CN9900022
(87) International publication number: WO9943411

(57) **Abstract**

A transparent filter than can pressurize lubricating oil before the internal combustion engine starts. The proposal of this invention aims to provide a filter that can pressurize lubricating oil, reduce starting resistance, minimize mechanical wear, and monitor filtration quality, before the internal combustion engine starts. The transparent filter of this invention consists of a flat DC motor, a decelerator, a lubricating oil pump, a check valve, and a gauge for the lubricating oil suction pipe, a filter paper core, a transparent hood, and a pedestal base. The flat DC motor, decelerator, a lubricating oil pump, lubricating oil suction pipe check valve, gauge for the lubricating oil suction rubber pipe are connected in sequence of the top lid of the filter. The filter paper core is filled into the transparent hood. The pedestal base is identical to those of ordinary filters.

## Description

### Technical field

This invention is a supplementary device for the lubricating system of internal combustion engines, namely a transparent filter that can pressurize lubricating oil before the combustion engine starts (hereinafter called PLBCES transparent filter).

### Background of invention

According to the current technology for lubricant filters of the internal combustion engines, there is not any device that can pressurize lubrication oil before the internal combustion engine starts, and filters function only to filter lubrication oil. According to the working principles of lubricating oil pumps, the current internal combustion engine can only make high-pressure lubrication oil after attaining a rotational speed. The starting resistance is no less than 0.5 times for starting the internal combustion engine before the high-pressure membrane forms to facilitate the rotation of the internal combustion engine. Starting the internal combustion engine with lubrication oil under no pressure, represents a process of the most severe wear of its parts, which constitutes over 45% of the total wear of the engine. At present, filter covers are made of metals in all the countries of the world, and thus it is impossible to monitor the filtration quality of lubricating oil by eye. This invention aims to solve these technical problems.

### Contents of invention

The proposal of this invention aims to provide a PLBCES transparent filter that can pressurize lubricant, reduce starting resistance, minimize mechanical wear, and monitor filtration quality, before the internal combustion engine starts.

The filter of this invention consists of a flat DC motor, a decelerator, a lubricating oil pump, a check valve, a gauge for the lubricating oil suction pipe, a filtration paper core, a transparent hood, and a pedestal base. The flat DC motor, decelerator, a lubricating oil pump, check valve and gauge for the lubricating oil suction pipe are connected in sequence of the top lid of the filter. A high-density filtration paper core for the removal of impurities below 2 µm is filled into the high-temperature-resistant hardened transparent hood and constructs the intermediary part. The pedestal base is identical to those of ordinary filters. The 3 parts are sealed with rubber washers and connected with nets.

In application, the flat DC motor drives the decelerator which then drives the lubrication oil pump at the speed ratio of 1:6, so that the lubricating oil pump may acquire a lubricating oil pressure of no less than 30 Kpa. The lubricating oil is sucked in through the lubricating oil inlet check valve and the gauge of the lubricating oil suction pipe of the lubricating oil pump, and high pressure lubricating oil is ejected out of the lubricating oil outlet of the lubricating oil pump to lubricate the friction surface of the internal combustion engine. A high-density filtration paper core is used to remove impurities below 2 µm. Made of high-temperature-resistant glass, the hood makes it convenient to monitor the filtration quality of lubricating oil. When the calibrated pressure is attained, it turns off power and the lubricating oil pump stops working.

The filter of this invention is identical to the original filter in size, and may guarantee the use of the same position and the same installation method as used to connect the original filter to the combustion engine, without any need to change any parts of the internal combustion engine. The powder switch adopts an on-off circuit for oil pressure indicator lamps in the combustion engine. When the calibrated lubricant pressure is attained, the indicator lamp for lubricating oil pressure turns off automatically. In the meantime, the motor for the PLBCES transparent filter turns off. There is no manual control, and lubricating oil pressurization completes within 1-3 seconds.

As compared with the current technology, this invention provides a device that can pressurize lubricating oil before the internal combustion engine starts, which has not been available before, without changing any design parameters of the main engine. The only addition of a pressurization device to the current filter may help realize automatic pressurization before the engine starts. You may dismantle the PLBCES transparent filter and remove the filtration paper core, if you need to replace it.

### Brief explanation of attached figures

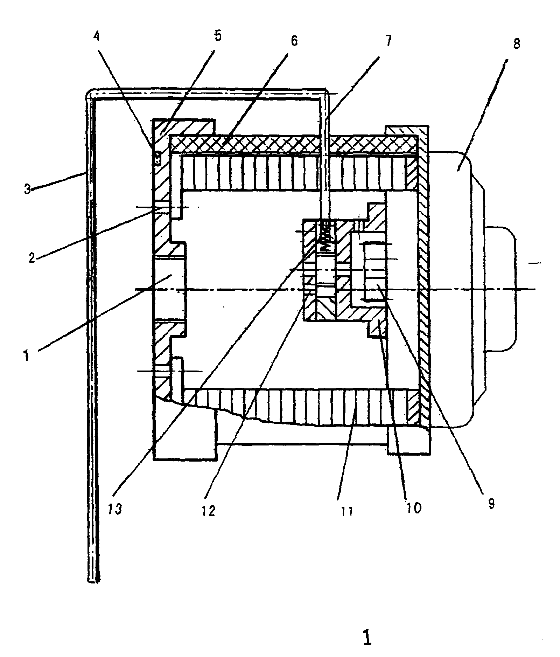

Fig. 1 is a cross-sectional view of the structure of this invention, in which, 1= main lubricating oil return hole, 2= main lubricating oil inlet, 3= oil suction pipe and gauge, 4= sealing washers, 5= pedestal base, 6= transparent hood, 7= oil suction rubber pipe, 8= flat DC motor, 9= decelerator, 10= lubricating oil pump, 11= filtration paper core, 12= lubricating oil outlet for the lubricating oil pump, 13= lubricating oil inlet and check valve of the lubricating oil pump.

From this figure, you may find that the filter of this invention consists of flat DC motor 8, decelerator 9, lubricating oil pump 10, check valve lubricating oil suction pipe 13, lubricating oil suction pipe and gauge 3, filtration paper core 11, transparent hood 6 and pedestal base 5. Flat DC motor 8, decelerator 9, lubricating oil pump 10, check valve lubrication oil suction pipe 13, lubricating oil suction pipe and gauge 3 are connected in sequence to the top lid of the filter. High-density filtration paper core 11 for the removal of impurities below 2 µm, is filled into high-temperature-resistant hardened transparent hood 6 and constructs the intermediary part. The pedestal base is identical to those of ordinary filters. The 3 parts are sealed with rubber washers 4 and connected with nets.

The filter of this invention is identical to the original filter in size, and may guarantee the use of the same position and the same installation method as used to connect the original filter to the combustion engine, without any need to change any parts of the internal combustion engine. The powder switch adopts an on-off circuit for oil pressure indicator lamps in the combustion engine.

## Claims

1. A transparent filter that can pressurize lubricating oil before the internal combustion engine starts, whose features lie in that it consists of a flat DC motor, a decelerator, a lubricating oil pump, a check valve, a gauge for the lubricating oil suction pipe, a filter paper core, a transparent hood, and a pedestal base. The flat DC motor, decelerator, a lubricating oil pump, check valve and gauge for the lubricating oil suction pipe are connected in sequence of the top lid of the filter. A high-density filtration paper core for the removal of impurities below 2 µm is filled into the high-temperature-resistant hardened transparent hood and constructs the intermediary part. The pedestal base is identical to those of ordinary filters. The 3 parts are sealed with rubber washers and connected wit nets.

2. The transparent filter that can pressurize lubricating oil before the internal combustion engine starts, as stated in Claim 1, has a feature that lies in that the power supply for the mentioned flat DC motor is connected with that for the lubricating oil pressure indicator lamp of the internal combustion engine.

3. The transparent filter that can pressurize lubricating oil before the internal combustion engine starts, as stated in Claim 1 or Claim 2, has features that lie in that it is identical, in size, to the original lubricant filter of the internal combustion engine, and the filtration paper core, in the middle, for the removal of impurities below 2 µm, is an independent and replaceable part.
